Europäisches Patentamt

European Patent Office

Office européen des brevets

(19)

(11) Veröffentlichungsnummer: **0 014 685**
**B1**

(12) **EUROPÄISCHE PATENTSCHRIFT**

(45) Veröffentlichungstag der Patentschrift:
16.09.81

(51) Int. Cl.³: **C 11 B 1/10,** C 11 B 3/02

(21) Anmeldenummer: **80810035.8**

(22) Anmeldetag: **31.01.80**

(54) Verfahren zur Gewinnung und/oder Raffination von tierischen Fetten.

(30) Priorität: **01.02.79 CH 1000/79**

(43) Veröffentlichungstag der Anmeldung:
**20.08.80 Patentblatt 80/17**

(45) Bekanntmachung des Hinweises auf die Patenterteilung:
**16.09.81 Patentblatt 81/37**

(84) Benannte Vertragsstaaten:
**AT BE CH DE FR GB IT NL SE**

(56) Entgegenhaltungen:
**CH-A-565 238**
**GB-A-1 058 076**
**US-A-2 118 454**
**US-A-2 166 160**

(73) Patentinhaber: **Haussener, Ernst, Dorfstrasse 35,
CH-3073 Gümligen (Kanton Bern) (CH)**

(72) Erfinder: **Schneider, Fred, Waldhausweg 28,
CH-3073 Gümligen (Kanton Bern) (CH)**
Erfinder: **Sirtl, Wolfgang, Buchholzstrasse 171,
CH-8053 Zürich (Kanton Zürich) (CH)**

(74) Vertreter: **Bovard, Fritz Albert et al, Bovard & Cie
Patentanwälte VSP Optingenstrasse 16,
CH-3000 Bern 25 (CH)**

## Verfahren zur Gewinnung und/oder Raffination von tierischen Fetten

Die vorliegende Erfindung bezieht sich auf ein Verfahren zur Gewinnung und/oder Raffination von tierischen Fetten durch Extraktion mit einem Gas in überkritischem Zustand, insbesondere zur Gewinnung von Fett aus Schlachtereiabfällen.

Es ist bekannt, dass Gase im überkritischen Zustand Lösungsmittel für Fette und Öle darstellen. Ein Verfahren zur Gewinnung von Pflanzenfetten und -ölen wird in der CH-A-565 238 beschrieben, wobei Kohlendioxid im überkritischen Zustand in einer Kreislaufextraktion als Extraktionsmittel eingesetzt wird. Als Extraktionsmittel können gesundheitlich, geschmacklich und chemisch unbedenkliche Gase eingesetzt werden, die keinen chemischen Rückstand ergeben. Solche Extraktionsverfahren haben den Vorteil, dass sie im Vergleich mit den üblicherweise angewendeten industriellen Verfahren, wie Lösungsmittelextraktion, Auskochen, Ausdämpfen, Ausschmelzen, je nach der Wahl der Extraktionsmittel normalerweise bei niedrigeren Temperaturen durchgeführt werden können. Dadurch werden Extrakt und Extraktionsrückstand nicht längeren Temperaturbehandlungen ausgesetzt, was im allgemeinen zur besseren Qualität der Produkte führt und energiesparend durchgeführt werden kann. Ferner sind die Produkte frei von chemischen Rückständen und somit gesundheitlich unbedenklich und geschmacklich unverändert.

Die Nachteile der beschriebenen Verfahren sind relativ lange Extraktionszyklen, bei welchen das zirkulierende Extraktionsmittel zur Extraktabscheidung entweder entspannt und nachträglich wieder komprimiert, oder die Extraktabscheidung durch Temperaturänderung, d.h. Kühlen und Aufheizen, herbeigeführt werden muss. Tierische Fette sind in der fluiden Phase nur in sehr geringem Ausmass löslich, so dass dieses Verfahren für die Extraktion von tierischen Fetten aufgrund der äusserst gerinen Ausbeute für gewerbliche Anwendung nicht in Frage kommt.

In der US-A-2 118 454 ist ein Verfahren zur Extraktion und Fraktionierung von hochmolekularen Fetten mit Hilfe niedermolekularer Verbindungen beschrieben. Die Extraktion bzw. Fraktionierung erfolgt bei diesem Verfahren im parakritischen Bereich, d.h. bei einer der kritischen Temperatur des Lösungsmittels angenäherten Temperatur, jedoch ausschliesslich in flüssiger Phase. Zur vollen Ausnützung des Lösevermögens wird in dieser Patentschrift der Einsatz von zusätzlichem Lösungsmittel sowie von mechanischem Rühren und Bearbeitung im Gegenstromprinzip vorgeschlagen. Dem Fachmann wird durch die genannte Vorveröffentlichung in keiner Weise nahegelegt, die Extraktion und Fraktionierung im überkritischen Bereich in einer fluiden Phase auszuführen. Durch die Vorschläge, das Lösevermögen durch Einsatz von zusätzlichem Lösungsmittel, mechanischem Rühren und Anwendung des Gegenstromprinzips zu erhöhen, wird von der Möglichkeit des Einsatzes überkritischer Bedingungen eher weggelenkt und hinsichtlich dieser Möglichkeiten möglicherweise sogar ein Vorurteil gebildet.

Beim Übergang in den überkritischen Zustand ändert sich jedoch das Lösevermögen sprunghaft und ist in der fluiden Phase wesentlich grösser, so dass auf die in der genannten Patentschrift vorgeschlagenen zusätzlichen Massnahmen vollständig verzichtet werden kann. Hierdurch wird der apparative Aufwand wesentlich vereinfacht. In der fluiden Phase kann eine Fraktionierung lediglich durch Veränderung der Druck- und Temperaturparameter gesteuert werden.

Die hier verwendete Bezeichnung «fluide Phase» bezieht sich auf das Gas in überkritischem Zustand.

Es ist Aufgabe der vorliegenden Erfindung, ein Verfahren zu schaffen, das die vorstehend angeführten Nachteile nicht aufweist und mittels einer relativ einfachen Einrichtung auf einfache und ökonomische Art mit relativ geringem Zeitaufwand ausführbar ist.

Gegenstand der Erfindung ist ein Verfahren, bei welchem man die Extraktion in einer statischen Kolonne ohne Kreislauf ausführt.

Ein weiterer Gegenstand der Erfindung ist die Anwendung des beschriebenen Verfahrens zur Gewinnung von Fett aus Schlachtereiabfällen.

Als Lösungsmittel für die Extraktion besonders geeignete und bevorzugte Gase sind Kohlendioxid, Distickstoffoxid und gegebenenfalls halogenierte Kohlenwasserstoffe, wie Äthan, Äthylen und fluorierte Kohlenwasserstoffe. Es können jedoch auch andere gesundheitlich und chemisch unbedenkliche Gase eingesetzt werden, sofern ihre kritischen Daten, die aus der Literatur bekannt sind, in die durch das Extraktionsgut bestimmten Druck- und Temperaturbereiche fallen.

Das beschriebene Verfahren ermöglicht die Extraktion von tierischen Fetten aus tierischem Ausgangsmaterial, wobei die natürliche Zusammensetzung des Fettes voll erhalten bleibt und weder das extrahierte Fett noch der Extraktionsrückstand chemisch verändert werden.

Das beschriebene Verfahren ermöglicht es, tierischen Produkten mehr als 95 Gew.-% des extrahierbaren Fettgehaltes zu entziehen, wobei die Parameter so gewählt werden können, dass nahezu wasserfreies Fett erhalten wird.

Massgeblich für die Lösungs- und Trenneigenschaften ist die Kombination der Parameter Druck ($p$) und Temperatur ($t$). Die Löslichkeit einer schwerflüchtigen Substanz kann in einem fluiden Gas so stark zunehmen, dass die Konzentration der gelösten Kompenente weit über dem Wert liegt, den man aufgrund des Dampfdruckes erwarten würde. Durch Variation dieser Parameter wird es somit ermöglicht, den Übergang des Wasseranteils vom Extrakt in den Rückstand oder umgekehrt vom Rückstand in den Extrakt zu steuern. In jedem Fall ist es jedoch zweckmässig, die Parameter $p > p_{krit.}$ und $t > t_{krit.}$ einzuhalten.

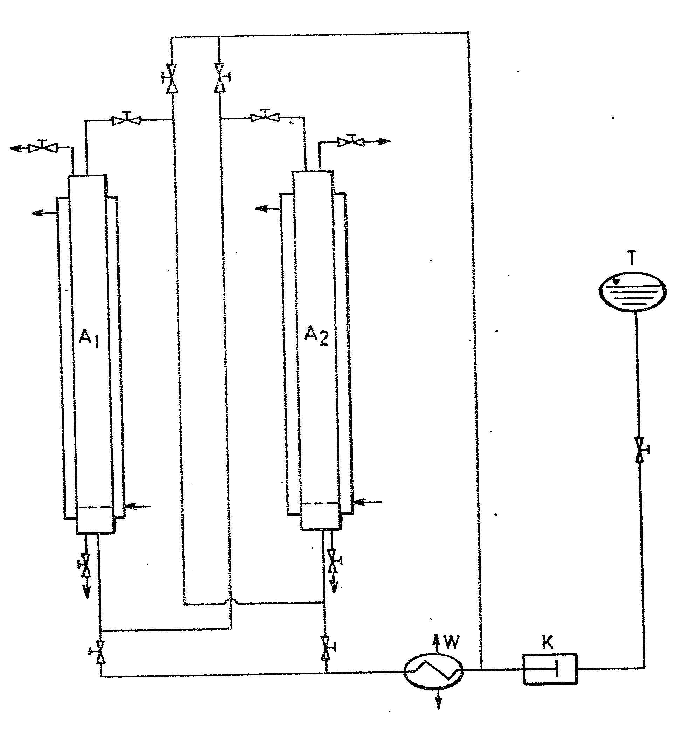

Im nachstehenden wird eine bevorzugte Ausführungsform der Erfindung unter Bezugnahme auf die Zeichnung beispielsweise erläutert.

Die Zeichnung zeigt eine zur Ausführung des beschriebenen Verfahrens geeignete Einrichtung in schematischer Darstellung.

In der dargestellten Einrichtung wird der Behälter $A_1$ in Form eines Autoklaven mit grob zerkleinertem Schlachtfett beschickt, wobei keine besondere Formgebung des eingefüllten Materials erforderlich ist und der Behälter dicht beladen werden kann. Durch Spülung mit Kohlendioxid wird der Luftsauerstoff aus dem Behälter entfernt. Danach wird der Behälter $A_1$ verschlossen, mit Kohlendioxid im überkritischen Zustand beladen und für die Extraktionsdauer stehen gelassen.

Während dieser Extraktionsdauer wird der analoge Behälter $A_2$ in Form eines Autoklaven auf gleiche Art mit Ausgangsmaterial beschickt und vom Luftsauerstoff befreit.

Nach Beendigung der Extraktion wird das Kohlendioxid in überkritischem Zustand vom Behälter $A_1$ in den Behälter $A_2$ übergeführt und der Behälter $A_1$ vollständig entspannt.

Im Behälter $A_2$ wird nun erneut der überkritische Zustand aufgebaut und auf gleiche Art verfahren wie mit dem Behälter $A_1$, was eine intermittierende Ausführung des Verfahrens unter ökonomischen Betriebsbedingungen ermöglicht.

Die Extraktionsdauer varriert in Abhängigkeit vom jeweiligen Ausgangsmaterial und liegt im allgemeinen im Bereich von 10–60 min.

Die Behälter $A_1$ und $A_2$ in Form von Autoklaven sind mit Heizmantel und feinporigen Metall-Filterplatten ausgerüstet. Während der Extraktion sammelt sich das extrahierte tierische Fett am Boden des kolonnenförmigen Autoklaven, während sich die Rückstände am Kopf des Autoklaven anreichern. Die Trennung des extrahierten Fettes vom Extraktionsrückstand kann entweder nach Ausstossen des gesamten Kolonneninhalts mechanisch oder durch Abschmelzen mittels des Heizmantels und Abzug der extrahierten Fettfraktion am Boden des Autoklaven erfolgen.

In der dargestellten Einrichtung wird Kohlendioxid aus dem Vorratsbehälter T zugeführt und über den Kompressor K und den Wärmeaustauscher W in den kritischen Zustand versetzt. Im Wärmeaustauscher W abgeführte Kompressionswärme kann direkt im Heizmantel genutzt werden, was in bezug auf Energiebedarf eine ökonomische Betriebsmöglichkeit darstellt.

Das als Lösungsmittel für die Extraktion verwendete Gas kann anschliessend auf bekannte Art regeneriert und rezirkuliert werden, was in bezug auf die Wirtschaftlichkeit des Verfahrens einen weiteren Vorteil ergibt.

Beispiel 1

Nach dem vorstehend beschriebenen Vorgehen wurden in der dargestellten Einrichtung pro Behälter $A_1$ bzw. $A_2$ je 800 g aus der Schlachterei anfallendes Nierenfett während 60 min mit trockenem Kohlendioxid unter einem Druck von 320 bar bei 45 °C abgepresst. Der Inhalt jedes Autoklaven wurde danach in Form einer festen Stange ausgestossen. Der extrahierte Fettanteil hatte sich am Boden jeder Kolonne angesammelt und war sauber vom Extraktionsrückstand am Kopf der Kolonne getrennt. Die beiden Anteile konnten mechanisch mit einem Messer voneinander getrennt werden.

Pro 800 g Ausgangsmaterial wurden 623 g festes, weisses Nierenfett mit einem Wassergehalt von weniger als 0,2 Gew.-% und F. 60 °C erhalten. Der als «Grieben» bezeichnete Extraktionsrückstand war eine rötlichbraune Masse, die, bezogen auf das Gesamtgewicht, 56,4 Gew.-% Wasser und 22,8 Gew.% Rohweiss, berechnet als Feuchtsubstanz, enthielt.

Beispiel 2

Beispiel 1 wurde mit der Ausnahme wiederholt, dass nach Beendigung der Extraktion der Inhalt des Autoklaven nicht ausgestossen, sondern der untere Teil des Autoklaven mittels des Heizmaterials auf 65 °C erwärmt und das extrahierte Fett in geschmolzener Form am Boden des Autoklaven abgezogen wurde.

Die erhaltenen Endprodukte zeigten einen Wassergehalt von weniger als 0,2 Gew.-%, F. 60 °C sowie die Verseifungszahl 176, Jodzahl 40 und Säurezahl 1,15.

Für den Fachmann ist es offensichtlich, dass das extrahierte Fett in Abhängigkeit von der für die Extraktion verwendeten Einrichtung und der gewählten Verfahrenssteuerung, beispielsweise der Einleitungsstelle für das als Lösungsmittel für die Extraktion eingesetzte Gas, im unteren oder oberen Teil der Kolonne angereichert und entnommen werden kann. In den beiden vorstehenden Beispielen erfolgte die Anreicherung des extrahierten Fettes im unteren Teil der Kolonne, indem das als Ausgangsmaterial verwendete, zu extrahierende Nierenfett auf die in der Zeichnung durch gestrichelte Linien angedeuteten, feinporigen Metall-Filterplatten in den Behältern $A_1$ und $A_2$ eingefüllt und das als Lösungsmittel für die Extraktion verwendete Kohlendioxid am Kopf der Behälter eingeleitet wurde. Bei Verwendung der Behälter $A_1$ und $A_2$ ohne den Einsatz der Metall-Filterplatten sinken die Extraktionsrückstände aufgrund ihres höheren spezifischen Gewichtes auf den Boden des Behälters, und das darüberstehende, extrahierte Fett kann entweder an dieser Stelle, d.h. im oberen Teil der Kolonne, oder nach Durchlauf durch die Extraktionsrückstände im geschmolzenem Zustand am Boden der Kolonne entnommen werden.

**Patentansprüche**

1. Verfahren zur Gewinnung und/oder Raffination von tierischen Fetten durch Extraktion mit einem Gas in überkritischem Zustand, dadurch gekennzeichnet, dass man die Extraktion mittels einer statischen Fluidsäule in einem Autoklaven ohne Kreislauf ausführt.

2. Verfahren nach Anspruch 1, dadurch gekennzeichnet, dass man als Gas Kohlendioxid verwendet.

3. Verfahren nach Anspruch 1, dadurch gekennzeichnet, dass man als Gas Distickstoffoxid verwendet.

4. Verfahren nach Anspruch 1, dadurch gekennzeichnet, dass man als Gas einen gegebenenfalls halogenierten Kohlenwasserstoff verwendet.

5. Verfahren nach Anspruch 4, dadurch gekennzeichnet, dass man Äthan, Äthylen oder einen fluorierten Kohlenwasserstoff verwendet.

6. Verfahren nach einem der vorangehenden Ansprüche, dadurch gekennzeichnet, dass man die extrahierte Fettfraktion mechanisch oder durch Abschmelzen abtrennt.

7. Verfahren nach einem der vorangehenden Ansprüche zur Gewinnung von Fett aus Schlachtereiabfällen.

**Revendications**

1. Procédé pour l'obtention et/ou le raffinage de graisses animales par extraction avec un gaz dans un état supérieur aux conditions critiques, caractérisé en ce que l'extraction est effectuée au moyen d'une colonne de fluide statique, dans un autoclave sans circulation.

2. Procédé selon la revendication 1, caractérisé en ce qeu le gaz utilisé est le dioxyde de carbone.

3. Procédé selon la revendication 1, caractérisé en ce que le gaz utilisé est le protoxyde d'azote.

4. Procédé selon la revendication 1, caractérisé en ce que l'on utilise comme gaz un hydrocarbure éventuellement halogéné.

5. Procédé selon la revendication 4, caractérisé en ce qu'on utilise l'éthane, l'éthylène ou un hydrocarbure fluoré.

6. Procédé selon l'une quelconque des revendications précédentes, caractérisé en ce que l'on sépare la fraction extraite des graisses par voie mécanique ou par fusion.

7. Procédé selon l'une quelconque des revendications précédentes pour l'obtention de graisses à partir de déchets d'abattoirs.

**Claims**

1. A method of recovering and/or refining animal fats by extraction using a gas at supercritical conditions, wherein the improvement comprises the step of carrying out the extraction by means of a static column in an autoclave without circulation.

2. The method of claim 1, wherein said gas is carbon dioxide.

3. The method of claim 1, wherein said gas is nitrous oxide.

4. The method of claim 1, wherein said gas is a halogenated or unhalogenated hydrocarbon.

5. The method of claim 4, wherein said hydrocarbon is ethane, ethylene, or a fluorinated hydrocarbon.

6. The method of any of the preceding claims, wherein said extracted fat is separated mechanically or by melting off.

7. The method of any of the preceding claims, wherein said animal fats are recovered from edible grades of offal.